# EUROPEAN PATENT APPLICATION

(11) **EP 2 495 218 A1**
(43) Date of publication of application: **05.09.2012**
(21) Application number: 10826334.4
(22) Date of filing: 27.10.2010
(51) Int. Cl.: C02F 1/04, B01D 1/00, B01D 5/00, C02F 1/50, C02F 1/68, C02F 1/78

(54) **DISTILLED WATER PRODUCTION SYSTEM**

(30) Priority: 28.10.2009 JP 2009262318
(71) Applicant: Mitsufuji, Takashi, Shiki-shi, Saitama 353-0002 (JP); Nakayama, Yoshinaka, Shizuoka-shi, Shizuoka 420-0035 (JP)
(72) Inventor: MITSUFUJI, Takashi, Shiki-shi, Saitama 353-0002 (JP)
(74) Representative: Schwarz & Partner
(86) International application number: PCT/JP2010/006352
(87) International publication number: WO 2011/052198

(57) **Abstract**

A distilled water production system (1) includes a main tank (2), a pressure reducer (3), a cooler (4) and a pool (5). Sea water or dirty water is contained in the main tank (2) as raw water for producing distilled water. The pressure reducer (3) brings an inside of the main tank (2) into a reduced pressure state. The cooler (4) is disposed in an upper part within the main tank (2) and cools water vapor produced by evaporation of the raw water occurring in the reduced pressure state. The pool (5) is disposed at a position below the cooler (4) within the main tank (2) and contains the distilled water obtained by cooling and condensation of the water vapor by the cooler (4). According to the distilled water production system (1), the running cost and construction and equipment costs can be suppressed to be low.

## Description

### Technical Field

The present invention relates to a system which produces distilled water from sea water, dirty water or the like.

### Background Art

At present, a water shortage is advancing on a global scale, and becoming a serious problem. For example, due to the water shortage on a global scale, desertification is advancing. In some areas, there is a problem that field crops cannot be cultivated under the influence of desertification of lands for agricultural use and pastures and food crises are occurring, and there also arises the problem that domestic animals, wild animals and the like are starving to death.

Further, in some developing countries, the present situation is such that rivers, lakes and the like are contaminated, and people drink water which is not suitable for drinking water. Further, in some areas in the tropics, parasites, protozoa and the like are parasitic to the water of rivers, and because the water is used for domestic water and drinking water, diseases caused by the parasites and the protozoa bring about intense suffering mainly to babies, infants and the like as endemic diseases of the regions.

If the situations are left as they are, there will inevitably be a global shortage of domestic water, drinking water, water for agricultural use and the like in the near future, and therefore, development and commercialization of the systems which produce distilled water from sea water, dirty water and the like are expected. Conventionally, the apparatuses which produce fresh water from sea water and the like have been proposed, and many of such desalination apparatuses use reverse osmosis membrane filters (for example, see Patent Literature 1).

However, in the conventional apparatus, treatment of producing fresh water by passing sea water and the like through a reverse osmosis membrane filer is performed, but such desalination treatment requires regular replacement of the reverse osmosis membrane filters. Accordingly, the running cost for filter replacement is required. Further, many of the conventional desalination apparatuses need large-scale plant construction, and require huge construction and equipment costs.

### Citation List

### Patent Literature

Patent Literature 1: Japanese Patent Laid-Open No. 2005-144332

### Summary of Invention

### Technical Problem

The present invention is made under the above described background. An object of the present invention is to provide a distilled water production system with which running cost and construction and equipment costs can be suppressed to be low.

### Solution to Problem

One aspect of the present invention is a distilled water production system, and the distilled water production system includes a tank in which sea water or dirty water is contained as raw water for producing distilled water, a pressure reducer that brings an inside of the tank into a reduced pressure state, a cooler that is disposed in an upper part within the tank, and cools water vapor produced by evaporation of the raw water occurring in the reduced pressure state, and a pool that is disposed at a position below the cooler within the tank, and contains the distilled water obtained by cooling and condensation of the water vapor by the cooler.

As described as follows, the other aspects exist in the present invention. Accordingly, the disclosure of the invention is intended to provide some of the aspects of the present invention, and is not intended to restrict the scope of the invention described and claimed herein.

### Brief Description of Drawings

[Figure 1] Figure 1 is an explanatory view of a distilled water production system in an embodiment of the present invention.
[Figure 2] Figure 2 is an explanatory view of the distilled water production system in the embodiment of the present invention.

### Description of Embodiments

Detailed description of the present invention will be described hereinafter. It should be noted that the following detailed description and accompanying drawings do not restrict the invention.

A distilled water production system of the present invention includes a tank in which sea water or dirty water is contained as raw water for producing distilled water, a pressure reducer that brings an inside of the tank into a reduced pressure state, a cooler that is disposed in an upper part within the tank, and cools water vapor produced by evaporation of the raw water occurring in the reduced pressure state, and a pool that is disposed at a position below the cooler within the tank, and contains the distilled water obtained by cooling and condensation of the water vapor by the cooler.

In the present invention as above, the inside of the tank is brought into a reduced pressure state by the pressure reducer, and therefore, raw water (sea water or dirty water) can be vaporized at a low temperature. When the water vapor that is produced by evaporation of the raw water is cooled by the cooler and condenses, the water vapor becomes distilled water, and is contained in the pool. In the system of the present invention, regular replacement of a filter is not required, and the running cost can be suppressed to be low, unlike the conventional desalination treatment using a reverse osmosis membrane filter. Further, large-scale plant construction as the conventional desalination apparatus is not required, and construction and equipment costs can be suppressed to be low.

Further, the distilled water production system of the present invention may include a compressor that compresses a refrigerant used by the cooler to cool the water vapor, and increases pressure and temperature of the refrigerant, and an evaporation promotion pipe that is disposed in a lower part of the tank, allows the refrigerant having the temperature increased by the compression to pass therethrough, and promotes the evaporation of the raw water by using exhaust heat from the refrigerant.

In the present invention as above, the high-temperature refrigerant which is compressed by using the compressor is passed through the evaporation promotion pipe which is disposed in the lower part within the tank, and evaporation of the raw water (sea water or dirty water) in the tank is promoted by exhaust heat from the high-temperature refrigerant. In this case, the refrigerant (low-temperature refrigerant) which is used to cool the water vapor is increased in temperature by compression, and can be used to vaporize the raw water. In this manner, the same refrigerant can be used for both cooling of the water vapor and promotion of evaporation of the raw water, and therefore, the distilled water production system is efficient.

Further, the distilled water production system of the present invention may include a re-evaporation suppression pipe that is disposed in a lower part within the pool, allows the refrigerant used by the cooler to cool the water vapor to pass therethrough, and cools the distilled water by the refrigerant to suppress re-evaporation of the distilled water.

In the present invention as above, the refrigerant (low-temperature refrigerant) which is used to cool the water vapor is passed through the re-evaporation suppression pipe disposed in the lower part within the pool, and re-evaporation of the distilled water in the pool is suppressed by using (reusing) the low-temperature refrigerant. In this manner, the same refrigerant can be used for both cooling of the water vapor and suppression of re-evaporation of the distilled water, and therefore, the distilled water production system is efficient.

Further, in the distilled water production system of the present invention, a heat insulator may be provided between an inner wall and an outer wall of the pool.

In the present invention as above, transfer of the heat from the inner wall to the outer wall of the pool is suppressed. Accordingly, even if the inner wall of the pool is cooled by the low-temperature distilled water in the pool, owing to the heat insulation effect of the heat insulator, the outer wall of the pool can be suppressed from being cooled, and occurrence of dew condensation on the outer bottom part of the pool can be suppressed. Further, transfer of the heat from the outer wall to the inner wall of the pool also can be suppressed by the heat insulator. Accordingly, even if the outer wall of the pool is warmed by the high-temperature water vapor in the tank, owing to the heat insulation effect of the heat insulator, the inner wall of the pool can be suppressed from being warmed, and re-evaporation of the distilled water in the pool can be suppressed.

Further, the distilled water production system of the present invention may include a sterilization treatment section that applies sterilization treatment to the distilled water.

In the present invention as above, even if saprophytic bacteria enter the distilled water in the pool, sterilization treatment (for example, sterilization treatment using ozone) is applied, and therefore, the distilled water suitable for drinking water or the like can be obtained.

Further, the distilled water production system of the present invention may include a mineral treatment section that applies mineral treatment to the distilled water by passing the distilled water through a mineral ore layer.

In the present invention as above, mineral treatment is applied to the distilled water, and therefore, mineral water suitable for drinking water can be obtained.

According to the present invention, the running cost and the construction and equipment costs of the distilled water production system can be suppressed to be low.

Hereinafter, the distilled water production system of an embodiment of the present invention will be described with use of the drawings. In the present embodiment, the case of the distilled water production system which is used in a water purification system or the like which produces distilled water from sea water, dirty water or the like is shown as an example.

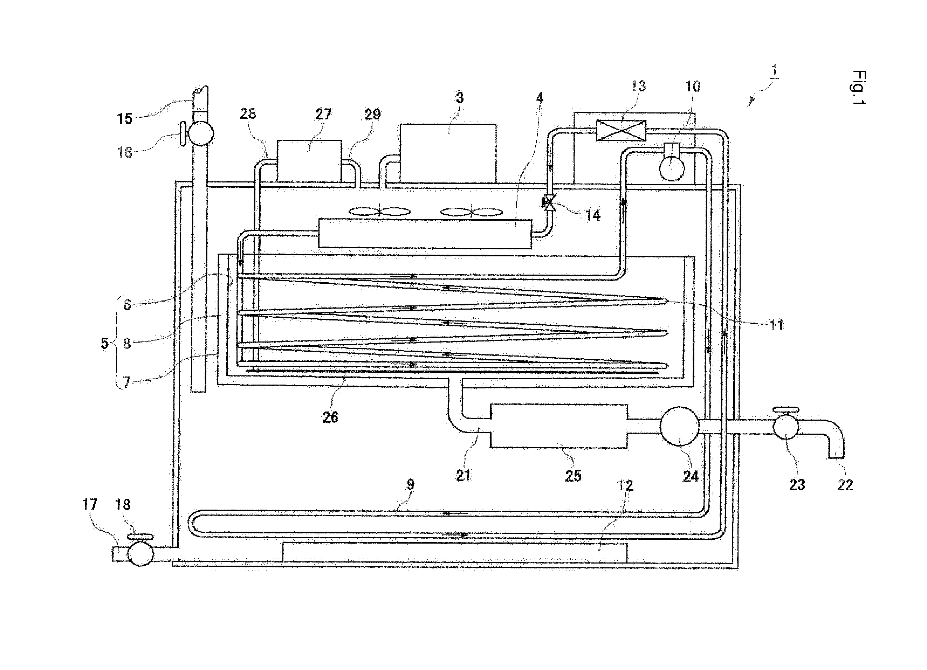

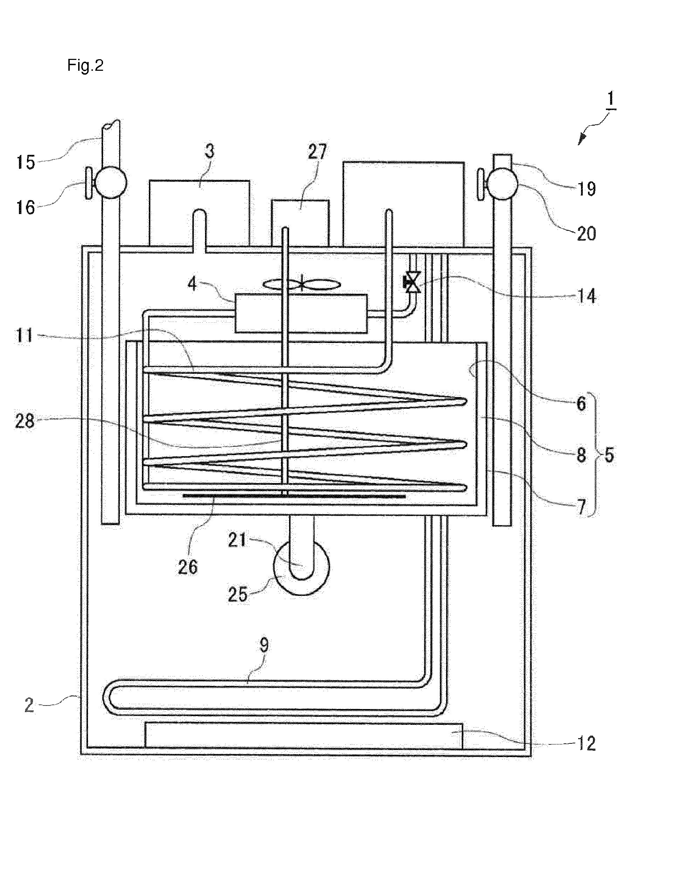

A configuration of the distilled water production system of the embodiment of the present invention will be described with reference to the drawings. Figure 1 and Figure 2 are explanatory views of the distilled water production system of the present embodiment. As shown in Figure 1 and Figure 2, a distilled water production system 1 includes a main tank 2 (also simply called a tank 2) which can contain sea water or dirty water (water of contaminated rivers, lakes or the like) as raw water for producing distilled water, and a pressure reducer 3 which brings an inside of the tank 2 into a reduced pressure state. When a predetermined amount of raw water is contained in the tank 2, the main tank 2 is completely sealed, and each treatment of pressure reduction/evaporation/distillation (treatments for water purification) is performed. By installing the tank 2 outdoor, the temperature of the raw water in the tank 2 can be increased by the radiant heat of the sun during the daytime.

A cooler 4 for cooling water vapor produced by evaporation of the raw water in the reduced pressure state is included in an upper part within the main tank 2. The cooler 4 is configured by a cooling coil or the like. The cooler 4 includes the function of injecting a refrigerant, and thereby depriving the surroundings of heat by the heat of evaporation of the injected refrigerant. Accordingly, the cooler 4 also can be called an evaporator.

A pool 5 which can contain distilled water obtained by cooling and condensation of the water vapor by the cooler 4 is included at a position below the cooler 4 in the tank 2. In this case, water droplets (distilled water) which condense on the cooler drop and are contained in the pool 5. A heat insulator 8 is provided between an inner wall 6 and an outer wall 7 of the pool 5. By the heat insulator 8, heat is suppressed from being transferred from the inner wall 6 of the pool 5 to the outer wall 7, and heat is also suppressed from being transferred from the outer wall 7 of the pool 5 to the inner wall 6.

A re-evaporation suppression pipe 9 is disposed in a spiral form in a lower part within the pool 5. The refrigerant which is used by the cooler 4 to cool the water vapor is passed through the re-evaporation suppression pipe 9. The distilled water is cooled by the refrigerant, and re-evaporation of the distilled water within the pool 5 is suppressed. Accordingly, the re-evaporation suppression pipe 9 also can be called a cooling pipe.

The re-evaporation suppression pipe 9 is connected to a compressor 10. The compressor 10 includes the function of compressing the refrigerant which is used by the cooler 4 to cool the water vapor (refrigerant which is used by the re-evaporation suppression pipe 9 to suppress re-evaporation of the distilled water), and increasing the pressure and temperature of the refrigerant.

An evaporation promotion pipe 11 is disposed in a spiral form in a lower part of the tank 2. The refrigerant which is compressed by the compressor 10 and increased in temperature (high-temperature and high-pressure refrigerant) is passed through the evaporation promotion pipe 11. Evaporation of the raw water in the tank 2 is promoted by using the exhaust heat from the refrigerant. Further, a preliminary heater 12 for increasing the temperature of the raw water in the tank 2 is included in the lower part of the tank 2. The preliminary heater 12 is used to increase the temperature of the raw water in the tank 2 when the temperature of external air is low during the night, at the time of cloudy weather and the like.

The evaporation promotion pipe 11 is connected to a condenser 13. The condenser 13 includes the function of reducing the temperature of the refrigerant which is compressed by the compressor 10 and is increased in temperature (high-temperature and high-pressure refrigerant which is used to promote evaporation of the raw water in the tank 2), and liquefying the refrigerant. The refrigerant which is reduced in temperature by the condenser 13 is fed to the cooler 4 and used to cool water vapor. In this case, an expansion valve 14 is provided between the condenser 13 and the cooler 4. The expansion valve 14 includes the function of reducing the pressure and temperature as a throttle valve in order to adiabatically expand the liquefied high-temperature and high-pressure refrigerant rapidly.

The main tank 2 is equipped with a water supply pipe 15 for supplying the raw water into the tank 2, and the water supply pipe 15 is provided with a water supply valve 16 for regulating the amount of the raw water to be supplied into the tank 2 so that the raw water in the tank 2 reaches a predetermined amount. Further, the main tank 2 is equipped with a raw water discharge port 17 for discharging (discarding) the raw water from the tank 2, and the raw water discharge port 17 is provided with a raw water discharge valve 18 for regulating the amount of the raw water which is discharged from the tank 2. Further, the main tank 2 is equipped with a pressure pipe 19 for bringing the inside of the tank 2 under a normal pressure at the time of discharge of the raw water or the like, and the pressure pipe 19 is provided with a pressure valve 20 for regulating an amount by which the pressure in the tank 2 is increased (see Figure 2).

A distilled water extraction pipe 21 for extracting the distilled water (purified raw water) from the pool 5 is included at a bottom part of the pool 5. The distilled water extraction pipe 21 is provided with a distilled water extraction port 22 which is an outlet port of the distilled water, and a distilled water extraction valve 23 for regulating an outflow amount of the distilled water. Further, the distilled water extraction pipe 21 is provided with a distilled water extraction pump 24 for forcefully extracting the distilled water. Further, a mineral ore layer 25 (mineral ore filter) is attached to the distilled water extraction pipe 21. The mineral ore layer 25 is a filter for allowing the distilled water to pass therethrough and contain minerals (performing mineral treatment) when the distilled water is used as drinking water.

Further, the pool 5 is equipped with an ozone aeration plate 26 for sterilizing the distilled water (purified raw water) by ozone gas. An ozone feed pipe 28 for feeding ozone gas generated in an ozone generator 27 is connected to the ozone aeration plate 26. The ozone generator 27 is provided with an air suction pipe 29 for sucking the air within the main tank 2 as the raw material of the ozone gas. The ozone generator 27 includes the function of dehumidifying the air sucked from the air suction pipe 29 (air in the main tank 2) to generate ozone gas.

In the present embodiment, for the inner wall 6 of the pool 5, coating treatment for preventing oxidation by ozone (occurrence of rust) is performed, or a material having oxidation resistance is used. Further, in the present embodiment, for a water vapor cooling section (section where the water vapor is cooled and condenses) of the cooler 4, coating treatment for preventing oxidation by a high-temperature and high humidity environment is performed, or the material having oxidation resistance is used.

In regard with the distilled water production system which is configured as above, an operation thereof will be described.

When distilled water is produced by using the distilled water production system 1 of the present embodiment, the pressure valve 20 and the water supply valve 16 are opened first, and the raw water (sea water, dirty water or the like) is poured into the main tank 2 from the water supply pipe 15. Subsequently, after pouring of a predetermined amount of raw water is completed, the pressure valve 20 and the water supply valve 16 are closed.

Next, the pressure of the inside of the main tank 2 is reduced by driving the pressure reducer 3. Subsequently, the condenser 13 and the compressor 10 are driven. By driving the condenser 13, the refrigerant which is fed to the cooler 4 (and the re-evaporation suppression pipe 9) is cooled. Further, by driving the compressor 10, the temperature of the refrigerant which is fed to the evaporation promotion pipe 11 is increased.

The raw water in the tank 2 is vaporized by exhaust heat from the evaporation promotion pipe 11. In this case, the inside of the main tank 2 is in the pressure reduced state, and therefore, the evaporation temperature of the raw water is lower than the evaporation temperature under atmospheric pressure. When the heat amount for heating the raw water is insufficient, the raw water in the tank 2 may be heated by using the preliminary heater 12.

The water vapor which is produced by evaporation of the raw water is cooled by the cooler 4 and condenses, and dew condensation is formed on the surface of the cooler 4. The water droplets (distilled water), which condense on the surface of the cooler 4, drop and are contained in the pool 5. In this case, when the ozone generator 27 is driven, the distilled water which is contained in the pool 5 is aerated to the ozone gas and sterilized.

After production of the distilled water is completed, the distilled water extraction valve 23 is opened, and the distilled water extraction pump 24 is driven, whereby the distilled water within the pool 5 is subjected to mineral treatment by the mineral ore layer 25, and thereafter, is extracted from the distilled water extraction port 22. The raw water which remains in the main tank 2 is discarded from the raw water discharge port 17 by opening the raw water discharge valve 18.

According to the distilled water production system 1 of the present embodiment as above, the running cost and the construction and equipment costs can be reduced to be low.

More specifically, in the present embodiment, the inside of the tank 2 is brought into the reduced pressure state by the pressure reducer 3, and therefore, the raw water (sea water or dirty water) can be vaporized at a low temperature. The water vapor which is produced by evaporation of the raw water becomes distilled water when the water vapor is cooled by the cooler 4 and condenses, and is contained in the pool 5. In the system of the present invention, regular replacement of a filter is not required, and the running cost can be suppressed to be low, unlike the conventional desalination treatment using a reverse osmosis membrane filter. Further, large-scale plant construction as the conventional desalination apparatus is not required, and construction and equipment costs can be suppressed to be low.

Further, in the present embodiment, the high-temperature refrigerant which is compressed by using the compressor 10 is passed through the evaporation promotion pipe 11 which is disposed in the lower part within the tank 2, and evaporation of the raw water (sea water or dirty water) within the tank 2 is promoted by exhaust heat from the high-temperature refrigerant. In this case, the temperature of the refrigerant (low-temperature refrigerant) which is used to cool the water vapor is elevated by compression, and can be used to vaporize the raw water. In this manner, the same refrigerant can be used for both cooling the water vapor and promotion of evaporation of the raw water, and therefore, efficiency is provided.

Further, in the present embodiment, the refrigerant (low-temperature refrigerant) which is used for cooling the water vapor is passed through the re-evaporation suppression pipe 9 which is disposed in the lower part within the pool 5, and re-evaporation of the distilled water in the pool 5 is suppressed by using (reusing) the low-temperature refrigerant. In this manner, the same refrigerant can be used for both cooling of the water vapor and suppression of re-evaporation of the distilled water, and therefore, efficiency is provided.

Further, in the present embodiment transfer of the heat from the inner wall 6 of the pool 5 to the outer wall 7 is suppressed by the heat insulator 8. Accordingly, even if the inner wall 6 of the pool 5 is cooled by the low-temperature distilled water in the pool 5, owing to the heat insulation effect of the heat insulator 8, the outer wall 7 of the pool 5 can be suppressed from being cooled, and occurrence of dew condensation on the outer bottom portion of the pool 5 can be suppressed. Further, by the heat insulator 8, transfer of the heat from the outer wall 7 of the pool 5 to the inner wall 6 also can be suppressed. Accordingly, even if the outer wall 7 of the pool 5 is warmed by the high-temperature water vapor in the tank 2, owing to the heat insulation effect of the heat insulator 8, the inner wall 6 of the pool 5 can be suppressed from being warmed, and re-evaporation of the distilled water in the pool 5 can be suppressed.

Further, in the present embodiment, even if saprophytic bacteria enter the distilled water in the pool 5, sterilization treatment using ozone is applied, and therefore, the distilled water suitable for drinking water and the like can be obtained. The method for sterilizing the distilled water is not limited to sterilization using ozone, but, for example, a sterilization method using a water flow type ultraviolet sterilizer, a sterilizing method using the technique of foreign substance and bacteria removal by a filter or the like may be used.

Further, in the present embodiment, mineral treatment is applied to the distilled water, and therefore, mineral water suitable for drinking water can be obtained.

The embodiment of the present invention is described by showing examples thus far, but the scope of the present invention is not limited by the examples, and the present invention can be changed/modified in accordance with an object within the scope described in claims.

For example, in the above description, the case of performing sterilization of the distilled water in the pool 5 is described, but the sterilization treatment of the distilled water may be performed in a separate treatment device which is provided outside the distilled water production system 1. When sterilization treatment using ozone gas is performed in the outside treatment device (separate treatment device), it is not necessary to apply coating treatment for preventing oxidation (occurrence of rust) by ozone to the inner wall 6 of the pool 5 or to use a material having oxidation resistance.

Further, when sterilization treatment of the distilled water is performed in a separate treatment device provided outside the distilled water production system 1, mineral treatment by the mineral ore layer 25 also may be performed in a separate treatment device which is provided outside. This is because mineral treatment is preferably performed after sterilization treatment of the distilled water.

A preferred embodiment of the present invention which is conceivable at the present point of time is described above. However, it is to be understood that various changes can be made with respect to the present embodiment, and all such changes as within the true spirit and scope of the present invention are intended to be included in the accompanying claims.

### Industrial Applicability

As above, the distilled water production system according to the present invention has the effect of being able to suppress the construction and equipment costs to be low, and is useful as a water purification system or the like which produces distilled water from sea water, dirty water or the like.

### Reference Signs List

- 1: distilled water production system
- 2: main tank
- 3: pressure reducer
- 4: cooler
- 5: pool
- 6: inner wall
- 7: outer wall
- 8: heat insulator
- 9: re-evaporation suppression pipe
- 10: compressor
- 11: evaporation promotion pipe
- 12: preliminary heater
- 13: condenser
- 14: expansion valve
- 15: water supply pipe
- 16: water supply valve
- 17: raw water discharge port
- 18: raw water discharge valve
- 19: pressure pipe
- 20: pressure valve
- 21: distilled water extraction pipe
- 22: distilled water extraction port
- 23: distilled water extraction valve
- 24: distilled water extraction pump
- 25: mineral ore layer
- 26: ozone aeration plate
- 27: ozone generator
- 28: ozone feed pipe
- 29: air suction pipe

## Claims

1. A distilled water production system, comprising:
a tank in which sea water or dirty water is contained as raw water for producing distilled water;
a pressure reducer that brings an inside of the tank into a reduced pressure state;
a cooler that is disposed in an upper part within the tank, and cools water vapor produced by evaporation of the raw water occurring in the reduced pressure state; and
a pool that is disposed at a position below the cooler within the tank, and contains the distilled water obtained by cooling and condensation of the water vapor by the cooler.

2. The distilled water production system according to claim 1, further comprising:
a compressor that compresses a refrigerant used by the cooler to cool the water vapor, and increases pressure and temperature of the refrigerant; and
an evaporation promotion pipe that is disposed in a lower part of the tank, allows the refrigerant having the temperature increased by the compression to pass therethrough, and promotes the evaporation of the raw water by using exhaust heat from the refrigerant.

3. The distilled water production system according to claim 1 or claim 2, further comprising:
a re-evaporation suppression pipe that is disposed in a lower part within the pool, allows the refrigerant used by the cooler to cool the water vapor to pass therethrough, and cools the distilled water by the refrigerant to suppress re-evaporation of the distilled water.

4. The distilled water production system according to any one of claim 1 to claim 3,
wherein a heat insulator is provided between an inner wall and an outer wall of the pool.

5. The distilled water production system according to any one of claim 1 to claim 4, further comprising:
a sterilization treatment section that applies sterilization treatment to the distilled water.

6. The distilled water production system according to any one of claim 1 to claim 5, further comprising:
a mineral treatment section that applies mineral treatment to the distilled water by passing the distilled water through a mineral ore layer.
